Europäisches Patentamt

European Patent Office    (11) Publication number: **0 006 691**

Office européen des brevets    **B1**

(19)

(12)    **EUROPEAN PATENT SPECIFICATION**

(45) Date of publication of patent specification: **25.05.83**    (51) Int. Cl.³: **G 01 S 13/80,**
                                                                           **G 07 C 11/00**

(21) Application number: **79301035.6**

(22) Date of filing: **01.06.79**

(54) **Object identification system.**

(30) Priority: **02.06.78 AU 4594/78**

(43) Date of publication of application:
     **09.01.80 Bulletin 80/1**

(45) Publication of the grant of the patent:
     **25.05.83 Bulletin 83/21**

(84) Designated Contracting States:
     **AT BE CH DE FR GB IT LU NL SE**

(56) References cited:
     **DE - A - 2 748 584**
     **US - A - 3 299 424**
     **US - A - 3 798 642**
     **US - A - 3 964 024**
     **US - A - 4 019 181**

     **Proceedings of the IEEE, Vol. 63, Nr. 8, August 1975 NEW YORK A. R. KOELLE et al. "Short-range radiotelemetry for electronic identification, using modulated RF backscatter".**

(73) Proprietor: **Cole, Peter Harold**
     **7 Dutton Grove**
     **West Lakes Shore Adelaide, South Australia (AU)**
(73) Proprietor: **Eshraghian, Kamran**
     **13 Hectorville Road**
     **Hectorville Adelaide, South Australia (AU)**
(73) Proprietor: **Roy, Ashim Kumar**
     **27 Elizabeth Street**
     **Evandale Adelaide South Australia (AU)**
(73) Proprietor: **The University of Adelaide**
     **North Terrace Adelaide, South Australia (AU)**

(72) Inventor: **Cole, Peter Harold**
     **7 Dutton Grove West Lakes Shore**
     **Adelaide South Australia (AU)**
     Inventor: **Eshragian, Kamran**
     **13 Hectorville Road Hectorville**
     **Adelaide South Australia (AU)**
     Inventor: **Roy, Ashim Kumar**
     **27 Elizabeth Street Evandale**
     **Adelaide South Australia (AU)**

(74) Representative: **Harrison, David Christopher et al,**
     **MEWBURN ELLIS & CO 2/3 Cursitor Street**
     **London EC4A 1BQ (GB)**

Courier Press, Leamington Spa, England.

Object identification system

The present invention relates to object identification systems wherein a transmitting means called the interrogator is coupled to an identification means called the transponder which is attached to or associated with the object to be identified, and which generates a reply signal which is coupled to a receiving means from which useful information about the object is extracted.

In one known system microwave signals are used, the transponder extracting power from the interrogator at one frequency and subsequently reradiating power at another frequency, the reradiated signal being detected and used as the identification means.

In another microwave system a passive label having a number of dipoles arranged in accordance with a code is attached to the object which is illuminated by a source radiating microwave energy. As the object moves across the microwave beam each dipole produces a frequency modulated pulse. Successive dipoles produce time displaced frequency modulated signals. The sum of these signals is detected by the interrogation unit and resolved into a serial code identifying the object.

In another such one-port system an interrogator illuminates a passing tag with microwave energy at one frequency. The tag radiates back a code modulated carrier at the second harmonic of the interrogation frequency.

In yet another microwave system the interrogation signal is modulated to produce a sub carrier and the coding is provided by switching the sub carrier on-off with a serial code.

The disadvantages associated with these microwave systems arise from difficulties in sufficiently confining the interrogation energy, statutory limits on levels of microwave power which can be used and in some cases clutter from extraneous objects.

In yet another system the principle of inductive coupling is exploited for object identification. The transponder is a passive electronic device having two uncoupled antennas. When a signal is received from the interrogating source the received energy is converted to dc which provides a power source from which the reradiated signal is generated. The transponders available in this category employ near-field electromagnetic coupling and are of the two-port type in which the interrogation signal is received at one port and the modulated reply signal is transmitted from the second port.

An inherent problem associated with such systems lies in their need for two uncoupled antennas requiring additional space on the transponder, which in practical applications is normally desired to be small. Furthermore, for the kind of circuit used for coupling, the bandwidth which must be provided is determined by the information rate required in the reply signal while the near-field antennas the strength of the electromagnetic coupling between the transponder and the interrogator is proportional to the quality factor. The well known inverse relationship between quality factor and bandwidth therefore provides unwelcome constraints on the performance of the overall system. These systems have the further disadvantage that the energy available for generating the reply signal has been attenuated by the losses involved in conversion of the interrogation signal energy first to dc and then reconversion of this energy to the frequency of the reply signal. Moreover the forward voltage drop provided by commonly available semi-conductor diodes involved in conversion to dc places a lower limit on threshold of operation.

A variation of the above technique could be designed to use a duplexer to eliminate the need for a second antenna; however the duplexer introduces further losses and imposes limitations on the bandwidth of the system.

Specific prior art patent specifications are British Patent No. 1,187,130 by Plessey Limited, United States Patent No. 3,299,424 by Jorgen P. Vinding, and United States Patent No. 3,964,024 by Hutton and Kramer, which specifications will be referred to later, the latter specification being acknowledged in the preamble of claim 1.

An object of the present invention is to provide a system for object identification whereby the transformation of energy from a first frequency to a second frequency is carried out with minimum energy loss and in which the modulation of the reply signal can be carried out without significant dissipation of energy and at a rate which is not limited by the bandwidth of the resonant circuit containing the transponder, near-field coupling element or antenna hereinafter generally referred to as the "coupling element".

A further object is to avoid the need to first convert to dc that portion of the received power which provides the reply coupling element stored energy and replaces the energy lost in the reply signal oscillation, and thereby to achieve efficient operation at low power level.

A still further object is to simplify the coupling elements used for the reception of energizing power and reradiation of the reply signal.

A still further object is to devise an object identification system providing a coded reply in which high quality tuned circuits can be exploited to enhance the transfer of power across the electromagnetic coupling links.

A still further object of the invention is to provide a means for implementing any one of the modulation methods such as Amplitude Shift Keying (ASK), Phase Shift Keying (PSK), Frequency Shift Keying (FSK) and Pulse Code Modulation (PCM) whereby the information bandwidth is not limited by the quality factor of the tuned circuit.

A still further object of the invention is to provide a control means whereby the switching instants for the generation of the second frequency can be established.

The present invention recognizes that power transfer in the electromagnetic propagation paths at two frequencies are independent and as a consequence there must be a fundamental component of current in the transponder coupling element in order to extract power from the applied field at the fundamental frequency created by the interrogation signal, and there must also be a second frequency component of current in the transponder coupling element in order to radiate the reply signal. The invention provides these necessary frequency components in a uniquely efficient way. The invention further recognizes the fact that efficient power transfer between near-field coupling elements proceeds when these coupling elements are reactive energy storage elements resonated with high quality factor by reactive energy storage elements of the complementary type.

The system requires in the transponder at least one coupling element used for simultaneous extraction of power from the transmitting source at one frequency and its subsequent reradiation at another frequency. The reply signal energy is not injected into the coupling element from a dc reservoir as in the prior art but rather it is synthesized, without prior conversion to dc, by switches and control elements which operate at appropriate instances of time to modulate the energy exchange process between the transponder near-field coupling element and its complementary energy storage element with which it is resonated.

Thus the invention comprises an object identification system wherein energy is transferred from a transmitter to a transponder by near-field coupling, either capacitive or inductive, to firstly establish an oscillation in a tuned circuit and switching to produce a sub-harmonic thereof whereby a receiver tuned to at least one multiple of that sub-harmonic, including possibly the sub-harmonic itself, detects the signal generated within the transponder, and secondly varying the switching pattern so that the reply signal becomes modulated with an information bearing code.

An important characteristic of our invention is that the energy which provides the reply signal stored energy and replaces the energy dissipated in the incidental losses of the reactive elements as a result of the reply signal oscillation is not derived by first converting an equivalent amount of received energy to dc, although some conversion to dc for control purposes may be effected. In our invention, the reply signal is obtained by modulating directly the energy exchange processes in the receptor coupling element, which is generally tuned to resonance to enhance the near-field power transfer between the transmitter and transponding device.

In the Plessey transponder, the method by which phase modulation of the reply signal is achieved places a limit, dependent on the retransmitting antenna quality factor, on the information rate achievable in the reply signal, as the bandwidth of the retransmitting coil tuned circuit establishes the rate at which signals of one phase will be attenuated and signals of another phase will be built up, when a change in the reply code takes place. The limitation is a significant one as the electromagnetic coupling between the transponder and the receiver also depends on the transponder antenna Q factor with the result that a narrow tuned circuit bandwidth is normally desired.

In our invention the method of modulation for the generation of a coded reply signal is such as to effect the phase change required without any dissipation of energy and the previously mentioned constraints do not exist. Further, in contrast to the Plessey patent referred to above, only a single coupling element is necessary for reception of the energizing power and retransmission of the reply signal.

The Hutton and Kramer patent described the classic two-port transponder of the Plessey variety, and a source of dc potential for operating the transponder is provided by rectifying the interrogating signal.

In relation to the Vinding system, important characteristics of our system are that the information in the reply code is transmitted in frequency ranges which differ from the interrogation frequency by factors of many times the bandwidth of the antenna tuned circuits, and at rates which can exceed by many times that bandwidth. For the Vinding system to be practical, information must be transmitted at closely related sidebands of the interrogation frequency as both the interrogation and transponder antennas in that system must be tuned to a narrow bandwidth in order to enhance the coupling between them, and the information bandwidth is therefore limited to a corresponding extent. The wide separation in our system between the interrogation and reply frequencies allows highly effective filtering of the interrogation energy from the receiver system, to the antenna of which the interrogation energy is normally strongly coupled as a consequence of the fact that both coupling elements scan the same region of space. In the Vinding system a single antenna element is used for both transmission and reception, and thereby making the task of uncoupling the interrogation and reply signals more difficult.

The difference has important practical consequences as in the Vinding system any disturbance to the interrogation antenna field by other objects moving in its vicinity will produce detuning and loading effects which will tend to obscure the modulation effects introduced by the transponder. In our system the effect of such moving objects is vastly different in that while some moderate amplitude modulation of the reply signal would occur, the information content would not be seriously degraded.

Brief description of drawings

Fig. 1 shows diagrammatically the basic elements of the invention, namely the transponder and the associated interrogator consisting of a transmitter and receiver, showing the mutual coupling between the transponder coupling element and the transmitter and receiver coupling elements,

Figs. 2 and 3 show respectively how the transponder coupling element can be connected across the resonating capacitor either directly or in crossed coupling,

Fig. 4 is a table showing the switching cycle which can be used to obtain a number of different sub-harmonics from a given transmitted signal, the patterns shown repeating cyclically,

Figs. 5, 6 and 7 show the wave-forms achieved by some selected switching,

Fig. 8 shows how switching may be effected by a series-connected field-effect transistor, showing also the wave-form achieved when interrupting alternate cycles,

Fig. 9 shows similarly how a parallel-connected field-effect transistor can be used to produce a different wave-form,

Fig. 10 shows how a single coupling element in the transponder can be replaced by a switched array of coupling elements,

Figs. 11, 12, 13 and 14 show respectively one particular array, a method of switching the array, one possible cyclic energy exchange process wave-form, and a table showing the sequence of connections required to produce the indicated wave-form.

Figs. 15 and 16 show respectively a circuit diagram for generating an amplitude or phase modulated reply code using a single coil and capacitor, and several wave-forms are shown,

Figs. 17 and 18 show respectively a circuit for an alternative method of control and a wave-form produced thereby,

Fig. 19 is a circuit diagram of an alternative form of device for generating the control signal,

Fig. 20 is a block diagram of a code generator, and

Fig. 21 is a typical wave-form of the code therefrom.

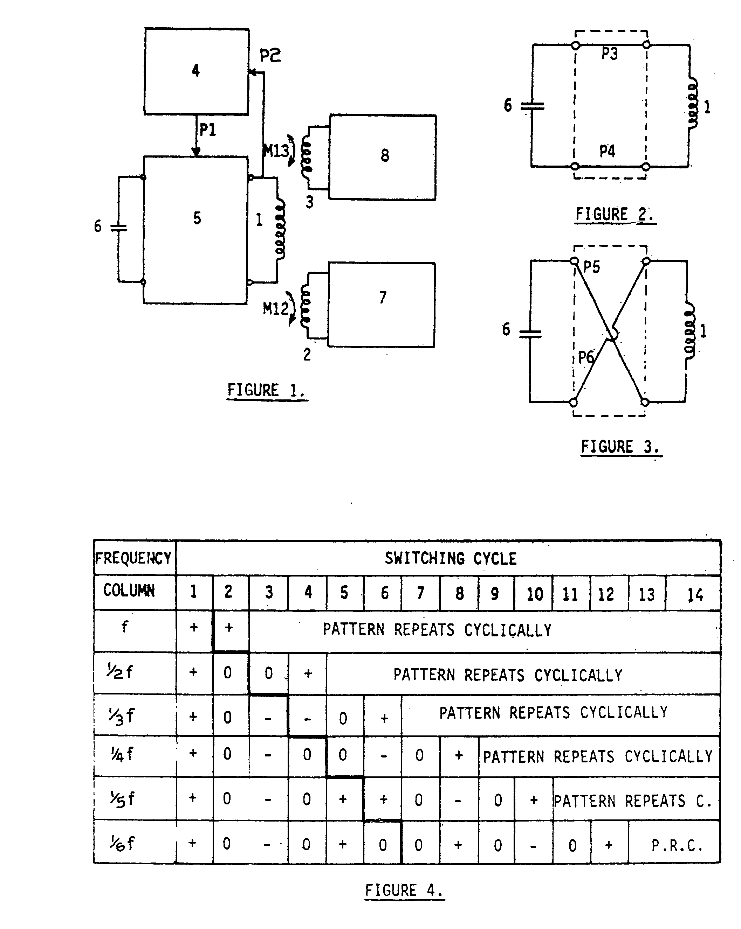

The essential characteristics of the invention can be better appreciated by reference to Fig. 1 in which the energy at a frequency $f_t$, for example 100 kHz, from transmitter 8 is fed to the transmitter coupling element 3 and is received at the transponder coupling element 1 by means of mutual coupling M13, between the transponder element 1 and transmitter element 3. Coupling M12 also exists between the transponder element 1 and the coupling element 2 of the receiver 7, the transmitter 8 and the receiver 7 forming the interrogator. The energy received by the transponder coupling element 1, in this example an inductor, is exchanged in an oscillatory manner with complementary energy storage element 6, in this example a capacitor, through switching network 5 operating under control circuit 4 which derives timing signals and possibly control power from the transponder element 1 via path P2 and operates the switching network via path P1. The switching network 5 provides for either direct connection as shown in Fig. 2 or crossed connection as shown in Fig. 3 between the transponder coupling element 1 and resonating capacitor 6.

The switching network also provides for the application of short circuits independently across either the inductor or capacitor, and provides for the insertion of open circuits independently in series with either the inductor or capacitor.

The control circuit provides signals which implement in a cyclic fashion a suitable set of interconnections for the energy exchange process desired. The switching is however constrained to interact with the energy exchange process in such a way as to provide for preservation as far as possible of stored energy within the purely reactive elements.

This objective is achieved by arranging the switching times so that capacitors are only short circuited at the time at which they have reached zero voltage, and inductors are only open circuited at the time at which they have reached zero current.

The switching elements in the switching array could be any form of electrical or mechanical switch suitable for the frequency range used which has the characteristic that its interposition between the reactive energy storage elements does not greatly increase the losses involved in the resonant process.

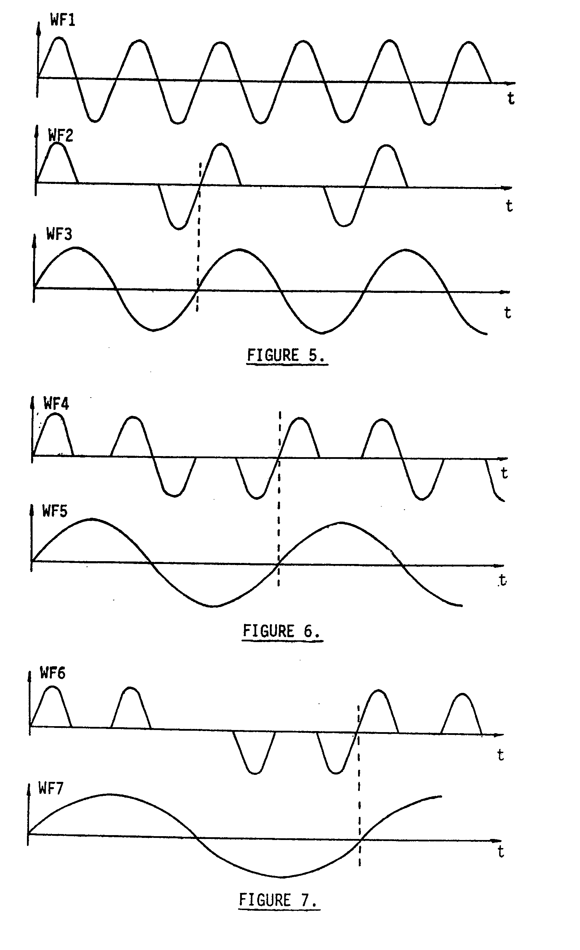

Figs. 5, 6 and 7 show in conjunction with Fig. 4 the generation of some particular examples of an unlimited number of sub-harmonic frequencies of a given transmitted signal.

In Fig. 4 direct interconnection of the capacitor and the inductor is signified by a plus (+) sign, crossed interconnection is signified by a minus (−) sign, while a zero indicates that both elements are open circuit.

In Figs. 5, 6 and 7 WF1 shows the voltage at the transmitter frequency $f_t$ across the transmitter coupling element coil, WF2, WF4 and WF6 show the current in the transponder inductor, and WF3, WF5 and WF7 show the voltage across a receiver coupling element coil tuned to the appropriate sub-harmonic frequency $f_t/n$.

Figs. 5, 6 and 7 show respectively the wave-forms when switching patterns appropriate to the generation of the sub-harmonic frequencies $\frac{1}{2}f_t$, $\frac{1}{3}f_t$, $\frac{1}{4}f_t$, are implemented, for example these corresponding to 50 kHz, 33.3 kHz and 25 kHz respectively when the transmitter frequency is 100 kHz. These switching patterns are defined, together with others which generate further sub-harmonic frequencies, in Fig. 4.

The columns in Fig. 4 show the switching arrangements which are required for successive time intervals of one half period of the transmitter frequency $f_t$. As Fig. 4 indicates, the patterns are to be repeated cyclically.

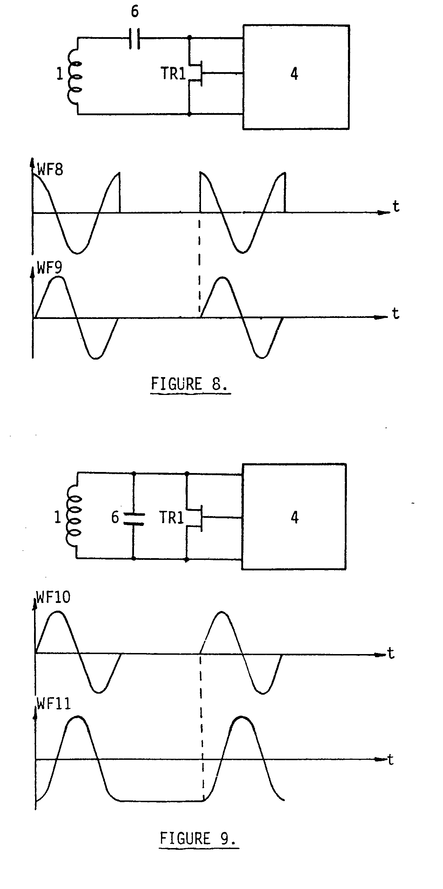

Fig. 8 illustrates one way in which the switching operation required for the generation of sub-harmonic $\frac{1}{2}f_t$ may be realized by means of a simple series switch which is operated to interrupt alternate cycles of the oscillation at the zeros of the inductor current. In this example, the switching is provided by means of a field-effect transistor (FET). The waveforms of inductor voltage and current are shown as WF8 and WF9 respectively.

An alternative method of the generation of the same sub-harmonic frequency is illustrated in Fig. 9 in which a single parallel switch is operated to suspend alternate cycles of the oscillation at the zeros of the capacitor voltage. The wave-forms of inductor voltage and current are shown as WF10 and WF11 respectively. The wave-forms shown in the examples of Figs. 5, 6, 7, 8 and 9 are unmodulated but a wide variety of modulation methods described later in the specification may be used.

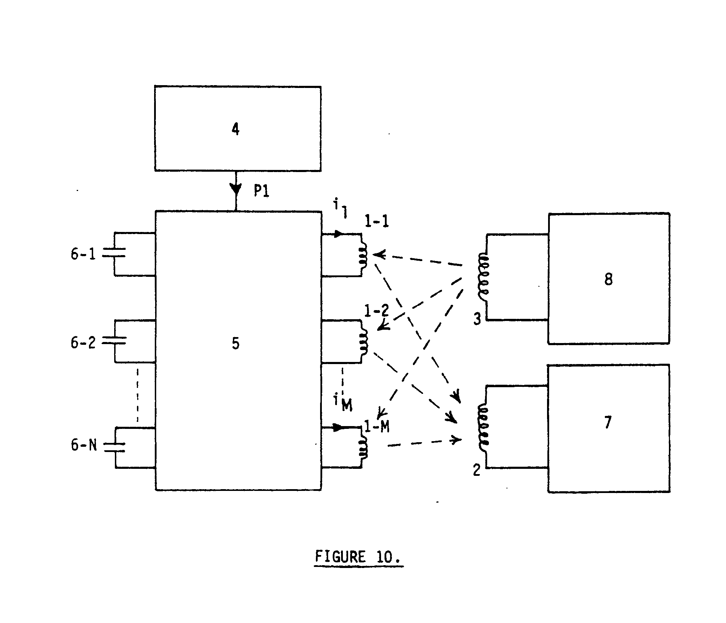

A more general example of the principles of the invention is shown in Fig. 10 in which energy is exchanged in a cyclic fashion between an array of M coupling elements 1-1 to 1-M and an array of complementary storage elements 6-1 to 6-N via a switching array 5. The switching array provides at any one time for the interconnection of any number of capacitors and any number of coupling elements in series or parallel with any polarity, as well as providing for open or short circuit connection of any of the individual elements, and is operated in such a way that continuity of stored energy across the instants of switching is preserved.

The set of coupling element inductors 1-1 to 1-M which between them provide near-field coupling of the interrogation energy into and the reply signal out from the transponder, are coupled by mutual inductance in varying (including zero) degrees to the transmitter and receiver systems. The sizes of inductors and capacitors and the switching process involved are so adjusted as to provide that at least one of the inductors contains currents with an harmonic component at the transmitter frequency, so that the induced voltage in that inductor at the transmitter frequency can produce a net power transfer to the transponder, while at least one coupling element inductor possesses harmonic components at substantially different frequencies so that information may be relayed to a receiver which may be tuned to reject signals at the transmitted frequency.

The reply signal from the transponder is designed to carry an information bearing code. Such a code can easily be imposed upon the reply signal by varying the pattern of energy exchange between the reactive energy storage elements so that there is generated either at one time a coded multiplicity of reply signal frequencies, or over a period of time a coded succession of amplitudes, frequencies or phases of the reply signal, while at the same time the characteristics of low loss energy exchange between the reactive elements and extraction of sufficient energy from the transmitted field to cover the loss in the resonance process are maintained.

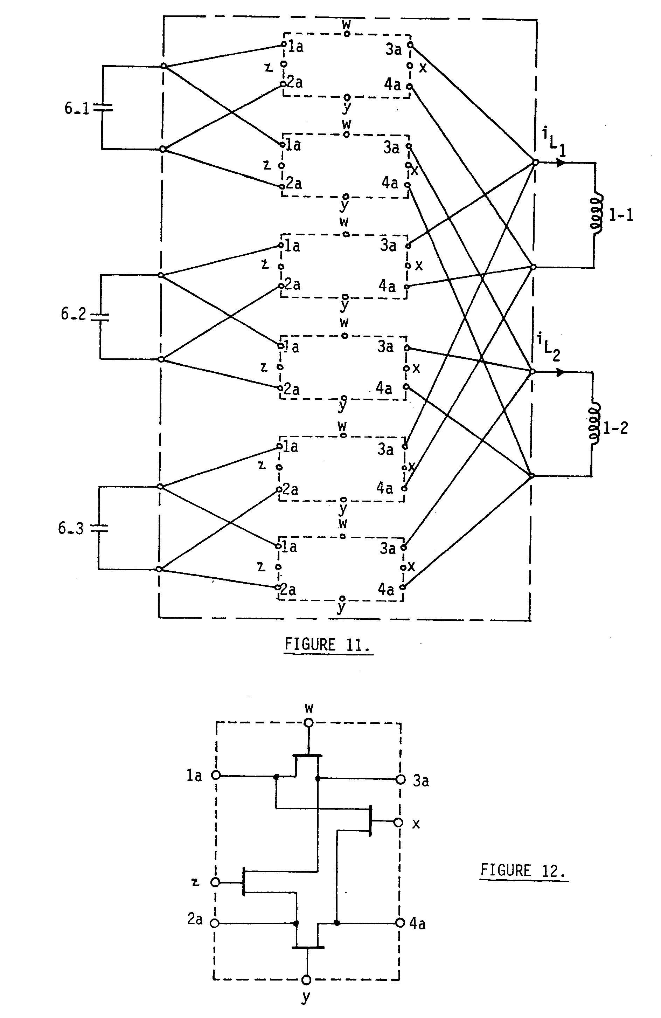

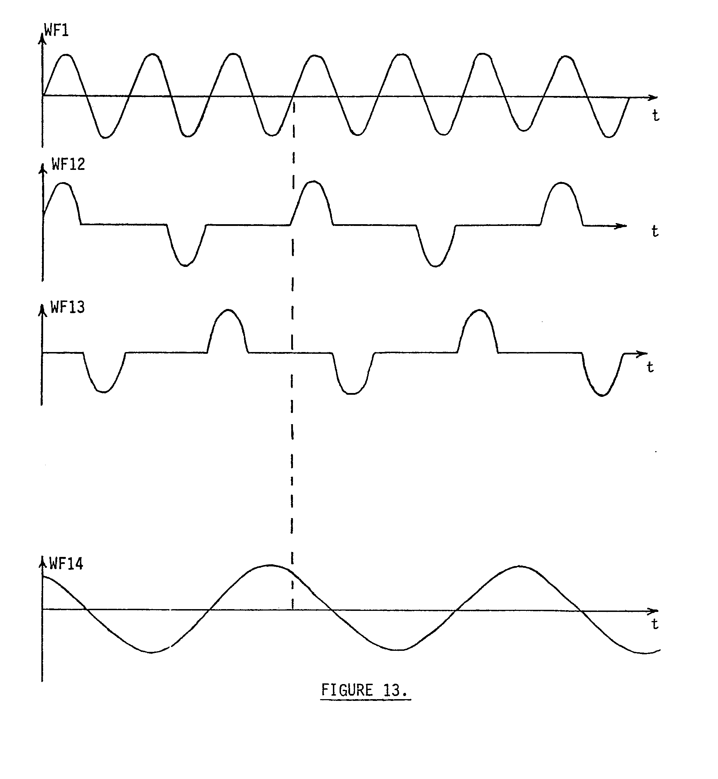

Fig. 11 illustrates one particular realization of the switching array and energy storage elements section of Fig. 10. Here two coupling element inductors 1-1 and 1-2 and three capacitors 6-1, 6-2, and 6-3 are shown. Each of the six switching blocks within Fig. 11 is of the form shown in Fig. 12 with connections 1a to 4a to respective capacitors and coupling elements. This switching block is realized in this instance from field effect transistors. Appropriate rectangular voltages at control gates w, x, y and z can provide any of the desired open circuit, short circuit, direct cross connection or inverted cross connection conditions.

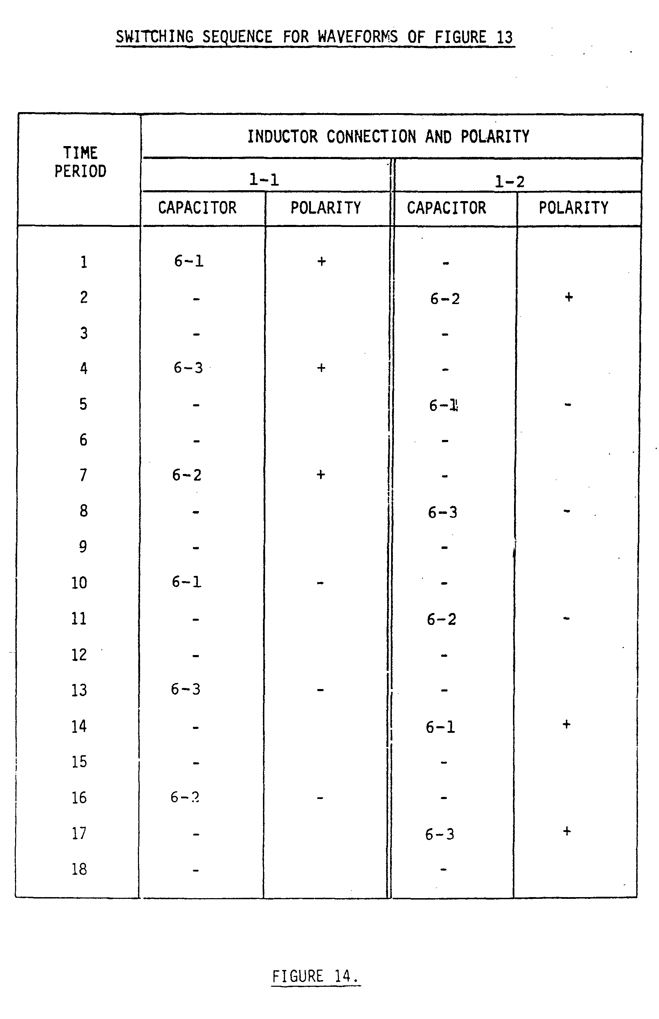

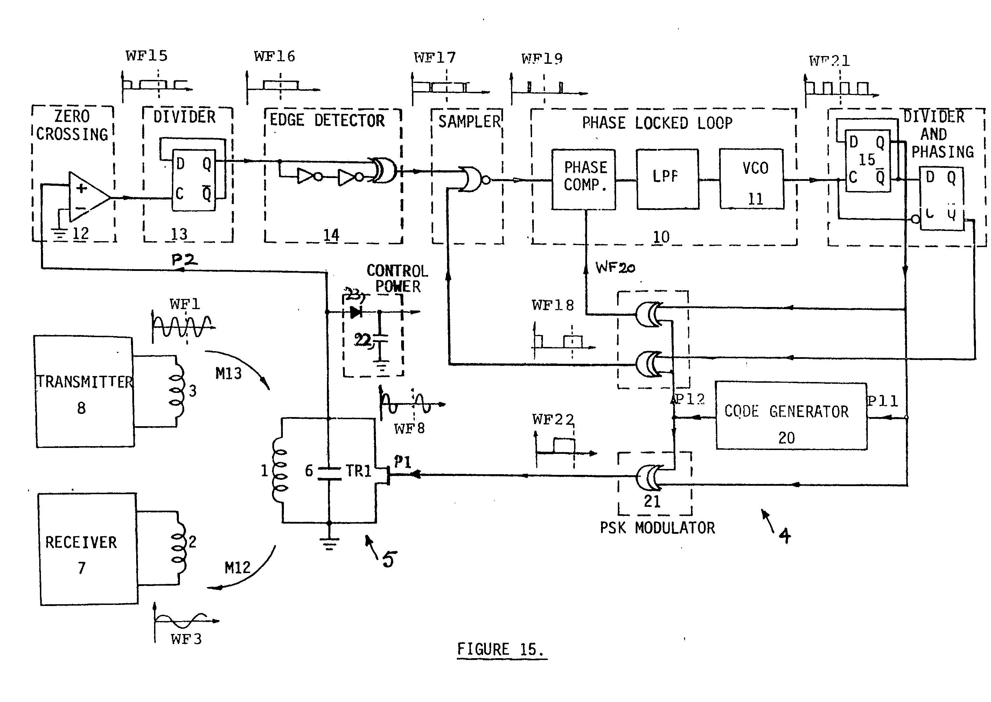

Fig. 13 shows one possible cyclic energy exchange process from an unlimited number which may be realised with the connections of Fig. 11. In this example the basic sub-harmonic frequency $\frac{1}{3}f_t$ is produced as WF14, together with other harmonics n/3 $f_t$ of the basic sub-harmonic. The sequence of connections required to produce the indicated wave-forms WF12, WF13 and WF14 (WF12 indicating the wave-form at the inductor 1-1 and WF13 indicating the wave-form at the inductor 1-2) is defined in Fig. 14, in which there is shown for successive time periods equal in length to one half period of the transmitter frequency the connections which are established between each of the capacitors and coupling element inductors. In the table a dash appearing for any time period signifies that the indicated coupling element inductor is left open circuit, while any capacitor not mentioned in any time period is also left open circuit.

Fig. 15 shows one way in which control functions which result in the generation of an amplitude or phase modulated reply code at a sub-harmonic frequency $\frac{1}{2}f_t$ from a transponder employing a single coupling element coil 1 and energy storage capacitor 6 can be implemented.

In this particular example dc power for energising the control circuit and in particular a code generator thereof is provided by rectification and storage of part only of the tuned circuit voltage by rectifier 23 and capacitor 22. Provision of the power for control and switching operations in this way is not however necessary; any convenient power source may be used for the control and switching operations without changing the essential nature of the invention, namely that the energies stored in and incidentally dissipated in the coupling element and its reactive energy storage element are supplied directly from stored energy built up in those reactive elements as a result of the oscillation at the interrogation frequency.

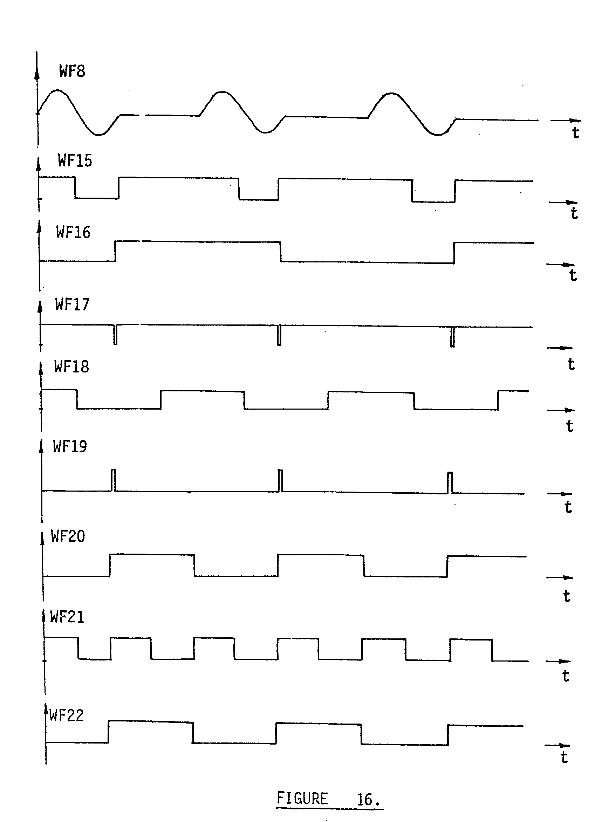

The circuit is best understood by reference to Fig. 16 which shows wave-forms produced by the principal sub units of the system.

The basic idea of the circuit is to maintain coherence between a voltage controlled oscillator (VCO) 11, which is tunable over a suitable range in the vicinity of transmitted frequency, and appropriate points of the wave-form of the oscillation which is included in the transponder resonant circuit by the transmitter and which is periodically suspended, without energy loss, by the control circuit.

In this particular circuit the oscillation is first converted to digital form in the zero crossing detector 12 which produces an output when the oscillation is greater than or equal to zero, to produce the wave-form WF15. The divider 13 and the edge detector 14 circuits produce respectively waveforms WF16 and WF17, the latter consisting of a series of negative pulses marking positive going transitions of the transponder tuned circuit wave-form.

In the example to which the wave-forms apply, these pulses occur at intervals of twice the interrogation frequency period, as the oscillation has been suspended for alternate cycles. If the tuned circuit switch TR1 were continuously left open, as does occur when some forms of modulation of the reply code are used, the tuned circuit oscillation would proceed uninterrupted and the pulses in the WF17 wave-form would occur with a period equal to that of the transmitter signal. Whichever of these two situations applies, pulses of a separation equal to twice the transmitter signal period are produced by gating the waveform WF17 by the phasing wave-form in WF18 in the sampling circuit to produce a reference pulse train WF19 which occurs at half the frequency of the oscillation. The phasing wave-form WF18 is derived in a straightforward manner from the voltage controlled oscillator output WF21, via a divider 15 and a phasing circuit.

The function of the reference pulse train WF19 is to control the frequency of the transponder VCO 11. This is accomplished by standard phase-locked-loop techniques using a commercially available integrated circuit 10 containing a phase comparator, an LPF and the VCO 11 to which the inputs are WF19 and wave-form WF20 fed back from the VCO 11 output via the divider 15.

The circuit as outlined above is arranged to suspend oscillation of the transponder resonant circuit during even numbered cycles of the transmitter wave-form. This will occur if the output from the code generator block 20, functions of which will be described elsewhere, is a binary "1". If the output of the code generator block is changed to a binary "0", the circuit functions are altered in an obvious way with the result that oscillations by the transponder tuned circuit are permitted during even numbered cycles of the transmitter wave-form and suspended during odd numbered cycles. The result of this is that the output signal of the transponder tuned circuit may be PSK modulated in harmony with the output from the code generator. Normally the time allocated to each bit of the serial reply code would correspond to several cycles of the sub-harmonic frequency $\frac{1}{2}f_t$, for example 8 cycles.

An elementary modification of the above circuit to produce binary on/off modulation in place of PSK modulation would be to replace the gate 21 within the block marked PSK modulator by a NOR gate to which the code input is inverted. Other obvious modifications to the modulation methods and parameters may be employed.

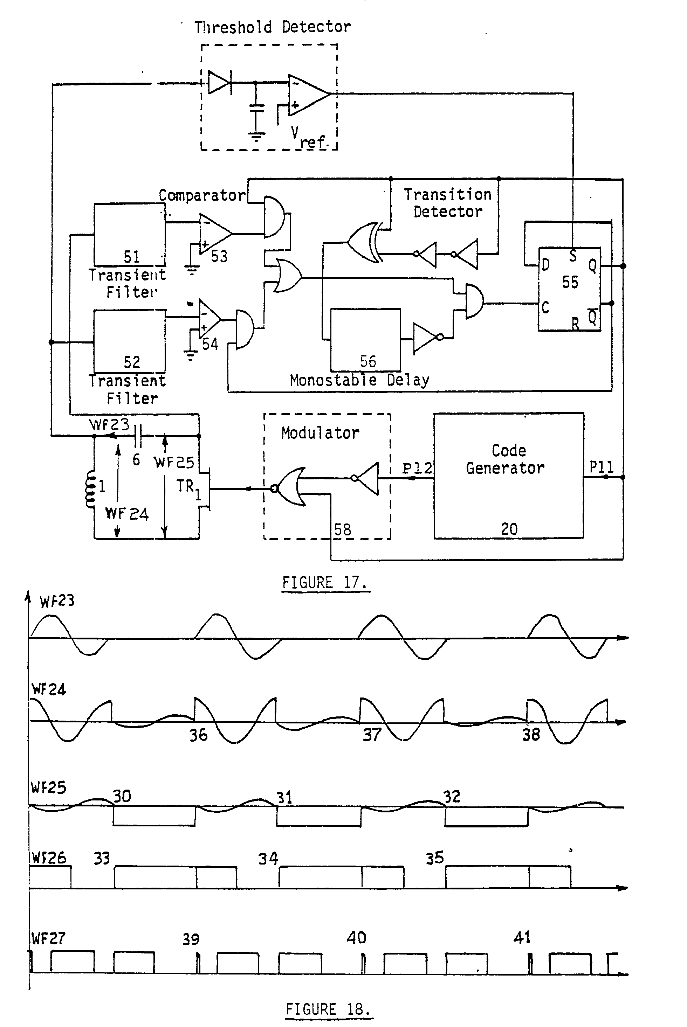

An alternative method of performing the control functions which generate the first sub-harmonic frequency $\frac{1}{2}f_t$, with a single inductor and capacitor is shown in Fig. 17. In this circuit, by way of illustration, the three elements inductor 1, capacitor 6 and switch TR1 are placed in series. The control circuit monitors both the inductor voltage WF24 and voltage WF25 across the switch TR1. Both these voltages are shown in the accompanying wave-forms of Fig. 18. The function of the control circuit is to determine those points, marked in Fig. 18 by 30, 31, 32, 33, 34 and 35, at which oscillations should be suspended by the opening of the switch TR1, and those points in Fig. 18 marked 36, 37, 38, 39, 40 and 41, at which the switch TR1 is to be closed to permit oscillation in phase with transmitted signal to be resumed.

For the determination of these points the sampled voltages WF24 and WF25 are first filtered by low pass filters 52 and 51 respectively free of high frequency transients which occur upon the opening or closing of the switch TR1 as a result of stray inductances or capacitances in the circuit. The resulting wave-forms are then digitized in comparators 54 and 53 respectively which produce an output when their input is less than or equal to zero and produce the wave-forms WF27 and WF26 shown. Selected positive transitions of the two wave-forms are used alternately to switch a cycle-select flip-flop 55. This flip-flop 55 controls the operation of the tuned circuit switch TR1 at alternate cycles of the transmitter frequency in a manner which is also affected by the output of the code generator 20; in this particular example the output of the cycle select flip-flop 55 and code generator 20 are combined to produce amplitude modulation rather than phase modulation of the reply signal at the subharmonic frequency $\frac{1}{2}f_t$. The output of the cycle-select flip-flop is also used to activate a monostable timing pulse generator 56 which has the function of inhibiting the clock input to cycle-select flip-flop 55, for a sufficient time after the switch TR1 has been opened or closed, to allow the previously mentioned switching transients to have been effectively attentuated. The code generator 20 has an output to a modulator 58 which also receives a signal from the flip-flop 55 to control the switch TR1.

In this and other examples of control circuits the design of the code generator is a matter of ordinary skill. A single example of the code generator design will therefore be given later.

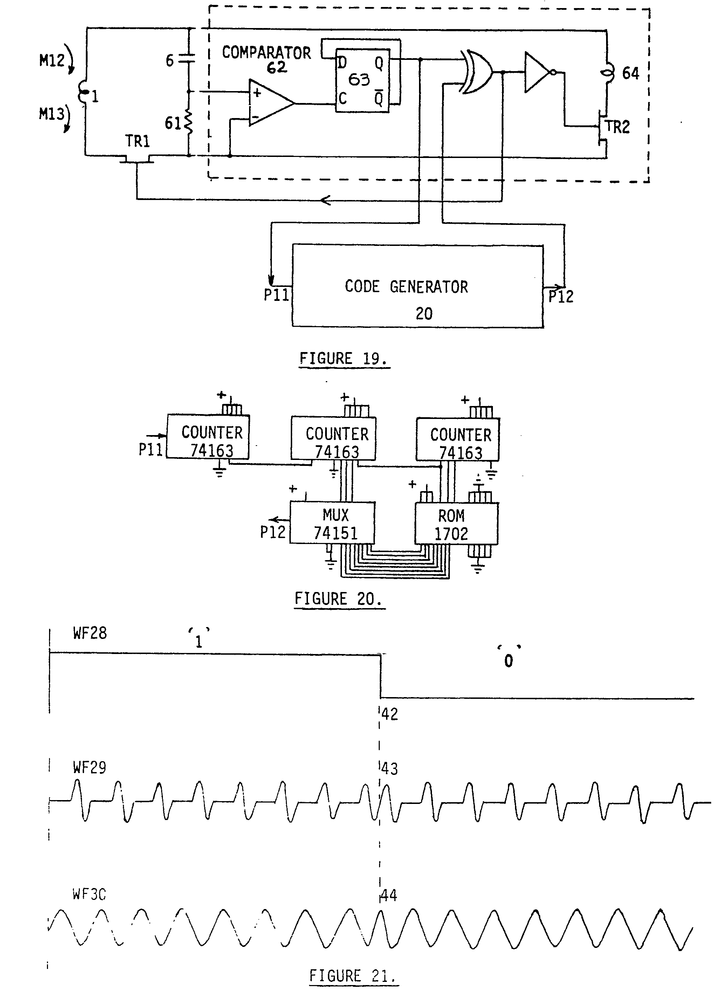

In Fig. 19 there is illustrated yet another method of providing the control signals which modulate the energy exchange process between the inductor 1 and energy storage capacitor 6. Again the objective is to produce the sub-harmonic frequency $\frac{1}{2}f_t$, by suspending oscillation in the transponder tuned circuit on alternate periods of the transmitter wave-form.

The tuned circuit is again a series one and the suspension of the oscillation is obtained by opening the switch TR1 at a positive transition of the inductor current wave-form. The information for detecting the transition is obtained by inserting in the series resonant circuit a current sampling resistor 61, whose value is small enough to not significantly lower the quality factor of the resonant circuit. The voltage drop across the resistor is monitored in a comparator 62 and used to trigger transitions of a cycle-select flip-flop 63, the output of which when set opens the switch, provided the output of the code generator 20 is a binary one.

The operations just described will suspend the oscillations at the required time.

A second function which the circuit must provide is the resumption of the oscillations one transmitter frequency period later. In this circuit, this function is achieved by providing a second inductor 64 and switch TR2. The switch TR2 is closed as the main switch TR1 is opened with the result that capacitor 6 and the auxiliary inductor 64 execute an auxiliary timing oscillation which bears a fixed time relationship to that of the tuned circuit formed by the inductor 1 and the capacitor 6. An obvious and useful case results when the value of inductor 64 equals the value of inductor 1 in which case the auxiliary oscillation is of the same time period as that occurring within the main tuned circuit. A positive transition of the current in the inductor 64 in which current flows also through 61 will again trigger the cycle-select flip-flop 63 and cause a suspension of the auxiliary oscillation and a resumption of the main one.

The operations just described are those which occur when the output of the code generator is a binary one. When the output of the code generator is a binary zero, the circuit operation is changed in an obvious way with the result that the time intervals in which the main and auxiliary oscillations are interchanged, and the phase of the reply signal is reversed.

So far as the receiver is concerned the generation of the sub-harmonic reply signal frequency occurs as a result of the auxiliary timing inductor 64 having a coupling to the receiver coupling element coil different from that of the inductor 1. An obvious and simple example results when the auxiliary inductor is uncoupled from both transmitter and receiver coupling element fields.

One form of code generator which may be employed in conjunction with this invention is illustrated in Fig. 20. This unit consists of a read only memory (ROM) and address selection logic. The input to the code generator at P11 is a pulse train of any frequency which is divided down to provide the appropriate bit rate.

In the example illustrated eight bits of the code are read at a time and are converted in the multiplexer to serial output at the desired rate.

The effect of a code on the reply signal is illustrated in Fig. 21. In this example the code wave-form WF28 appearing at path P12, PSK modulates the reply signal carrier, which in this case is half the interrogation frequency. The phase change occurs at the instants of time 42, 43 and 44. the effect of the phase modulation on the current in the transponder inductor is shown in wave-form WF29. The wave-form WF30 shows the voltage across a receiver antenna element tuned to the reply signal carrier frequency with sufficient bandwidth to pass the phase modulated (PSK) reply signal and at the same time reject the continuous wave interrogation signal.

**Claims**

1. An object identification system wherein an interrogator includes a transmitter (8) and a receiver (7) having a transmitting near-field coupling element (3) and a receiving near-field coupling element (2) and wherein a transponder has at least one resonant circuit which includes at least one near-field coupling element (1) for receiving a signal from the transmitting element (3) and at least one storage element (6) for reactive energy, a control circuit (4) including a code-generating element (20) to generate at least sub-harmonics of the interrogation frequency as an information-bearing reply signal from the transponder to the receiving element (2) characterised in that the control circuit (4) and code generating element (20) act on switching means (5) in the resonant circuit including the coupling element (1) and storage element (6) whereby the control circuit varies the pattern of exchange between the coupling element (1) and the storage element (6) in said resonant circuit of the energy received from the transmitter (8), the coupling element (1) as well as receiving the signal from the transmitting element (3) acting as a transmitting element for the transponder reply signal.

2. An object identification system according to Claim 1 in which the pattern of energy exchange between the transponder near-field coupling element (1) and the storage element (6) is modulated by switching means (TR1) connected either in parallel or in series with the storage element (6).

3. An object identification system according to Claim 2, wherein said near-field coupling element (1) is an inductor and said switching means (TR1) are connected to at least a capacitive circuit forming said storage element (6) to cut and restore said signal (M13) at zero capacitor (6) voltage or zero inductor (1) current, but at selected times and wherein part of said signal (M13) is used to energize said control circuit (4) and switching means (TR1).

4. An object identification system according to any one of the preceding claims, containing means (10, 12, 13, 14, 15, or 51, 52, 53, 54, 55, 56, or 61, 62, 63, 64) for detection of times at which alteration of the interconnections between the coupling and storage elements (1, 6) may be effected with minimum energy loss and means (TR1, TR2) to effect switching at the said times.

5. An object identification system according to any one of the preceding claims, wherein a part of the said signal (M13) received in said transponder (5) is rectified and stored to assist in actuating the said control circuit (4) and switching means (5, TR1).

6. An object identification system according to Claim 5, wherein the said code generating element is actuated by part of the energy received in the transponder coupling element (1) from said transmitter (8) and stored in a holding element (22).

7. An object identification system according to Claim 6, wherein the said holding element is a capacitor (22) fed through a rectifier (23) coupled to the said transponder coupling element (1).

8. An object identification system according to any one of the preceding claims, wherein a plurality of near-field coupling elements (1-1, 1-2, - - - 1-M) are used in the transponder in which energy is exchanged in a cyclic fashion between a set of reactive energy storage elements (6-1, 6-2, - - - 6-N) via a switching array (5) so that at least sub-harmonics are generated within said transponder near-field coupling elements (1-1, 1-2, - - - 1-M).

9. An object identification system according to any one of the preceding claims in which there is generated either at one time a coded plurality of reply signal frequencies or over a period of time a coded succession of amplitudes, frequencies or phases of the reply signal.

10. An object identification system according to Claim 9, wherein the said code is an amplitude modulated code.

11. An object identification system according to Claim 9, wherein the said code is a phase modulated code.

**Patentansprüche**

1. Objekt-Identifizierungssystem, worin eine Abfrageeinrichtung einen Sender (8) und einen Empfänger (7) umfaßt, der ein sendendes Nahfeld-Kopplungselement (3) und ein empfangendes Nahfeldkopplungselement (2) aufweist und worin ein Transponder wenigstens einen Resonanzkreis aufweist, der wenigstens ein Nahfeld-Kopplungselement (1), um ein Signal vom sendenden Element (3) zu empfangen, und wenigstens ein Speicherelement (6) für Blindenergie enthält, sowie einen Steuerkreis (4) mit einem kodeerzeugenden Element (20) für die Erzeugung von wenigstens Subharmonischen der Abfragefrequenz als informationstragendes Antwortsignal vom Transponder zum empfangenden Element (2) besitzt, dadurch gekennzeichnet, daß der Steuerkreis (4) und das kodeerzeugende Element (20) auf Schalter-Einrichtungen (5) im Resonanzkreis einwirken, der das Kopplungselement (1) und das Speicherelement (6) umfaßt, wodurch der Steuerkreis das Muster des Austausches der vom Sender (8) empfangenen Energie zwischen dem Kopplungselement (1) und dem Speicherelement (6) im genannten Resonanzkreis variiert, wobei das Kopplungselement (1) sowohl das Signal vom sendenden Element (3) aufnimmt, als auch als ein sendendes Element für das Antwortsignal des Transponders wirkt.

2. Objekt-Identifizierungssystem nach Anspruch 1, dadurch gekennzeichnet, daß das Muster des Energieaustausches zwischen dem Transponder-Nahfeld-Kopplungselement (1) und dem Speicherelement (6) durch Schalter-Einrichtungen (TR1) moduliert wird, die entweder parallel oder in Reihe mit dem Speicherelement (6) geschaltet sind.

3. Objekt-Identifizierungssystem nach Anspruch 2, dadurch gekennzeichnet, daß das genannte Nahfeld-Kopplungselement (1) ein Induktor ist und die Schalter-Einrichtungen (TR1) mit wenigstens einer kapazitiven Schaltung verbunden sind, die das genannte Speicherelement (6) bildet, um das genannte Signal (M13) bei Nullspannung des Kondensators (6) oder Nullstrom des Induktors (1), jedoch zu ausgewählten Zeiten zu unterbrechen und wiederherzustellen und daß ein Teil des genannte Signals (M13) dazu verwendet wird, um den Steuerkreis (4) und die Schalter-Einrichtungen (TR1) mit Energie zu versorgen.

4. Objekt-Identifizierungssystem nach irgendeinem der vorhergehenden Ansprüche, dadurch gekennzeichnet, daß es Einrichtungen (10, 12, 13, 14, 15 oder 51, 52, 53, 54, 55, 56, oder 61, 62, 63, 64) für die Erfassung von Zeitpunkten aufweist, zu welchen ein Veränderung der Zwischenverbindungen zwischen den Kopplungs- und Speicherelementen (1, 6) mit einem Minimum an Energieverlust durchgeführt werden kann und daß es Einrichtungen (TR1, TR2) besitzt, welche das Schalten zu den angeführten Zeitpunkten bewirken.

5. Objekt-Identifizierungssystem nach irgendeinem der vorhergehenden Ansprüche, dadurch gekennzeichnet, daß ein Teil des genannten Signals (M13), das vom genannten Transponder (5) empfangen wird, gleichgerichtet und gespeichert wird, um bei der Betätigung des genannten Steuerkreises (4) und der Schalter-Einrichtungen (5, TR1) mitzuwirken.

6. Objekt-Identifizierungssystem nach Anspruch 5, dadurch gekennzeichnet, daß das genannte kodeerzeugende Element durch einen Teil der Energie betätigt wird, die im Transponderkopplungselement (1) vom Sender (8) empfangen und in einem Halteelement (22) gespeichert wird.

7. Objekt-Identifizierungssystem nach Anspruch 6, dadurch gekennzeichnet, daß das genannte Halteelement ein Kondensator (22) ist, der von einem Gleichrichter (23) gespeist wird, der mit dem genannten Transponderkopplungselement (1) gekoppelt ist.

8. Objekt-Identifizierungssystem nach irgendeinem der vorhergehenden Ansprüche, dadurch gekennzeichnet, daß ein Vielzahl von Nahfeld-Kopplungselementen (1-1, 1-2, - - - 1-M) im Transponder eingesetzt wird, in welchen Energie zyklisch zwischen einem Satz von Blindenergie-Speicherelementen (6-1, 6-2, - - - 6-N) über eine Schalter-Anordnung (5) so ausgetauscht wird, daß wenigstens Subharmonische innerhalb der genannten Transponder-Nahfeld-Kopplungselemente (1-1, 1-2, - - - 1-M) erzeugt werden.

9. Objekt-Identifizierungssystem nach irgendeinem der vorhergehenden Ansprüche, dadurch gekennzeichnet, daß entweder zu einem Zeitpunkt eine kodierte Vielzahl von Antwortsignalfrequenzen oder innerhalb einer Zeitspanne eine kodierte Aufeinanderfolge von Amplituden, Frequenzen oder Phasen des Antwortsignals erzeugt wird.

10. Objekt-Identifizierungssystem nach Anspruch 9, dadurch gekennzeichnet, daß der genannte Kode ein amplitudenmodulierter Kode ist.

11. Objekt-Identifizierungssystem nach Anspruch 9, dadurch gekennzeichnet, daß der genannte Kode ein phasenmodulierter Kode ist.

**Revendications**

1. Système d'identification d'objets où un interrogateur comprend un émetteur (8) et un récepteur (7) ayant un élément de couplage (3) proche du champ de transmission et un élément de couplage (2) proche du champ de réception et où un transpondeur a au moins un circuit résonnant qui comprend au moins un élément de couplage proche du champ (1) pour recevoir un signal de l'élément de transmission (3) et au moins un élément de stockage (6) pour une énergie réactive, un circuit de contrôle (4) comprenant un élément générateur de code (20) pour produire au moins des sous-harmoniques à la fréquence d'interrogation sous forme d'un signal de réponse contenant une information du transpondeur à l'élément récepteur (2), caractérisé en ce que le circuit de contrôle (4) de l'élément générateur de code (2) agissent sur un moyen de commutation (5) dans le circuit résonnant comprenant l'élément de couplage (1) et l'élément de stockage (6), ainsi le circuit de contrôle fait varier le motif d'échange entre l'élément de couplage (1) et l'élément de stockage (6) dans ledit circuit résonnant, de l'énergie reçue du transmetteur (8), l'élément de couplage (1), en plus de recevoir le signal de l'élément de transmission (3), servant d'élément de transmission pour le signal de réponse du transpondeur.

2. Système d'identification d'objets selon la revendication 1, où le motif de l'échange d'énergie entre l'élément de couplage proche du champ du transpondeur (1) et l'élément de stockage (6) est modulé par un moyen de commutation (TR1) qui est connecté soit en parallèle ou en série avec l'élément de stockage (6).

3. Système d'identification d'objets selon la revendication 2, où ledit élément de couplage proche du champ (1) est une bobine d'inductance et ledit moyen de commutation (TR1) est connecté à au moins un circuit capacitif formant l'élément de stockage d'énergie (6) pour couper et restaurer ledit signal (M13) à une tension nulle du condensateur (6) ou un courant nul de la bobine d'inductance (1), mais en des temps choisis et où une partie dudit signal (M13) est utilisée pour exciter ledit circuit de controle (4) et ledit moyen de commutation (TR1).

4. Système d'identification d'objets selon l'une quelconque des revendications précédentes, comprenant un moyen (10, 12, 13, 14, 15 ou 51, 52, 53, 54, 55, 56 ou 61, 62, 63, 64) pour la détection des temps où la modification des interconnexions entre les éléments de couplage et de stockage (1, 6) peut être effectuée avec une perte minimale d'énergie et un moyen (TR1, TR2) pour effectuer une commutation auxdits temps.

5. Système d'identification d'objets selon l'une quelconque des revendications précédentes, où une partie dudit signal (M13) reçu dans ledit transpondeur (5) est redressée et stockée pour aider à la mise en action dudit circuit de controle (4) et dudit moyen de commutation (5, TR1).

6. Système d'identification d'objets selon la revendication 5, où ledit élément générateur de code est actionné par une partie de l'énergie reçue dans l'élément de couplage du transpondeur (1) dudit émetteur (8) et est stockée dans un élément de maintien (22).

7. Système d'identification d'objets selon la revendication 6, où ledit élément de maintien est un condensateur (22) alimenté par un redresseur (23) couplé audit élément de couplage du transpondeur (1).

8. Système d'identification d'objets selon l'une quelconque des revendications précédentes, où un certain nombre d'éléments de couplage proches du champ (1-1, 1-2, ... 1-M) sont utilisés dans le transpondeur où l'énergie est échangée d'une façon cyclique entre un groupe d'éléments réactifs de stockage d'énergie (6-1, 6-2, ... 6-N) par un agencement de commutation (5) afin qu'au moins les sous-harmoniques soient produits dans ledits éléments de couplage proches du champ du transpondeur (1-1, 1-2, ... 1-M).

9. Système d'identification d'objets selon l'une quelconque des revendications précédentes, où est produit soit en une fois une quantité codée de fréquences du signal de réponse ou sur une certaine période de temps, une succession codée d'amplitudes, de fréquences ou de phases du signal de réponse.

10. Système d'identification d'objets selon la revendication 9, où ledit code est un code modulé en amplitude.

11. Système d'identification d'objets selon la revendication 9, où ledit code est un code modulé en phase.

FIGURE 1.

FIGURE 2.

FIGURE 3.

| FREQUENCY | SWITCHING CYCLE | | | | | | | | | | | | | |
|---|---|---|---|---|---|---|---|---|---|---|---|---|---|---|
| COLUMN | 1 | 2 | 3 | 4 | 5 | 6 | 7 | 8 | 9 | 10 | 11 | 12 | 13 | 14 |
| f | + | + | PATTERN REPEATS CYCLICALLY | | | | | | | | | | | |
| ½f | + | 0 | 0 | + | PATTERN REPEATS CYCLICALLY | | | | | | | | | |
| ⅓f | + | 0 | - | - | 0 | + | PATTERN REPEATS CYCLICALLY | | | | | | | |
| ¼f | + | 0 | - | 0 | 0 | - | 0 | + | PATTERN REPEATS CYCLICALLY | | | | | |
| ⅕f | + | 0 | - | 0 | + | + | 0 | - | 0 | + | PATTERN REPEATS C. | | | |
| ⅙f | + | 0 | - | 0 | + | 0 | 0 | + | 0 | - | 0 | + | P.R.C. | |

FIGURE 4.

FIGURE 5.

FIGURE 6.

FIGURE 7.

FIGURE 8.

FIGURE 9.

FIGURE 10.

4

FIGURE 11.

FIGURE 12.

WF1

WF12

WF13

WF14

FIGURE 13.

**0 006 691**

## SWITCHING SEQUENCE FOR WAVEFORMS OF FIGURE 13

| TIME PERIOD | INDUCTOR CONNECTION AND POLARITY | | | |
|---|---|---|---|---|
| | 1-1 | | 1-2 | |
| | CAPACITOR | POLARITY | CAPACITOR | POLARITY |
| 1 | 6-1 | + | - | |
| 2 | - | | 6-2 | + |
| 3 | - | | - | |
| 4 | 6-3 | + | - | |
| 5 | - | | 6-1 | - |
| 6 | - | | - | |
| 7 | 6-2 | + | - | |
| 8 | - | | 6-3 | - |
| 9 | - | | - | |
| 10 | 6-1 | - | - | |
| 11 | - | | 6-2 | - |
| 12 | - | | - | |
| 13 | 6-3 | - | - | |
| 14 | - | | 6-1 | + |
| 15 | - | | - | |
| 16 | 6-2 | - | - | |
| 17 | - | | 6-3 | + |
| 18 | - | | - | |

FIGURE 14.

7

FIGURE 15.

FIGURE 16.

Threshold Detector

FIGURE 17.

FIGURE 18.

10

FIGURE 19.

FIGURE 20.

FIGURE 21.